# EUROPÄISCHE PATENTANMELDUNG

(11) **EP 3 865 727 A1**
(43) Veröffentlichungstag der Anmeldung: **18.08.2021**
(21) Anmeldenummer: 21154268.3
(22) Anmeldetag: 29.01.2021
(51) Int. Cl.: F16F 1/38, F16F 1/362, B62D 33/067, F15B 15/02, F15B 15/14, B62D 33/06

(54) **FAHRZEUGKABINENLAGER UND KIPPVORRICHTUNG MIT EINEM FAHRZEUGKABINENLAGER**

(30) Priorität: 31.01.2020 DE 102020102509
(71) Anmelder: Weber-Hydraulik GmbH, 74363 Güglingen (DE)
(72) Erfinder: JAVDANITEHRAN, Mehdi, 70806 Kornwestheim (DE); WINKLER, Torsten, 74397 Pfaffenhofen (DE)
(74) Vertreter: Lemcke, Brommer & Partner Patentanwälte Partnerschaft mbB

(57) **Zusammenfassung**

Die Erfindung betrifft ein Fahrzeugkabinenlager (28) zur Anordnung in einer Kolbenvorrichtung (14) einer Kippvorrichtung (12)zwischen einer Fahrzeugkabine (22) und einem Fahrzeugrahmen (24) und zur Dämpfung von zwischen dem Fahrzeugrahmen (24) und der Fahrzeugkabine (22) übertragenen Schwingungen, aufweisend ein um eine Lagerachse (34) drehbares erstes Lagerelement (28.1) zur Verbindung mit einem ersten Anbindungselement 30, das der Fahrzeugkabine (22) oder dem Fahrzeugrahmen (24) zugeordnet ist, ein gegenüber dem ersten Lagerelement (28.1) entgegen der Federkraft eines Verbindungselements (44) begrenzt bewegbares und konzentrisch zu dem ersten Lagerelement (28.1) angeordnetes zweites Lagerelement (28.2) zur Verbindung mit einem zweiten Anbindungselement 32, das durch die Kolbenvorrichtung (14) der Kippvorrichtung (12) gebildet wird, wobei das Verbindungselement (44) wenigstens ein aus in alle drei zueinander senkrechten Raumrichtungen verflochtenen Drähten aufgebautes Dämpfungsgewebemittel (46) aufweist. Weiterhin betrifft die Erfindung eine Kippvorrichtung (12) mit einem derartigen Fahrzeugkabinenlager (28).

## Beschreibung

Die Erfindung betrifft ein Fahrzeugkabinenlager gemäß dem Oberbegriff von Anspruch 1. Weiterhin betrifft die Erfindung eine Kippvorrichtung mit einem derartigen Fahrzeugkabinenlager.

Ein Fahrzeugkabinenlager zur Lagerung einer Fahrzeugkabine an einem Fahrzeugrahmen eines Fahrzeugs ist beispielsweise aus DE 36 01 506 A1 bekannt. Darin wird ein Fahrzeugkabinenlager beschrieben, das als elastisches Lager aus einem Gummi-Metallteil mit einem inneren zylindrischen Metallteil und einem äußeren zylindrischen Metallteil aufgebaut ist. Das innere Metallteil ist mit der Fahrzeugkabine und das Aufnahmeauge mit dem Fahrzeugrahmen verbunden. Zwischen beiden Metallteilen ist ein erster Gummiring und zur Erzielung einer progressiven Zunahme der Federkonstante in Radialrichtung ein zu dem ersten Gummiring axial versetzt angeordneter zweiter Gummiring vorgesehen, der nur mit einem Metallteil verbunden ist. Zwischen dem zweiten Gummiring und dem gegenüberliegenden Metallteil ist ein umlaufender Luftspalt vorhanden. Wenn der radiale Federweg im Bereich des Luftspaltes liegt, wirkt somit nur der erste Gummiring als Federelement. Erst bei einem radialen Einfederweg, der größer als der Luftspalt ist, wirkt zusätzlich der zweite Gummiring als zusätzliche Gummifeder. Dadurch steigt nach Überwinden des Luftspaltweges die Federkonstante progressiv an.

Äußere Einflüsse, wie die Temperatur, Strahlung, Feuchte oder der Kontakt mit chemischen Stoffen können zu einer nachteiligen vorübergehenden oder auch dauerhaften Veränderung der Materialeigenschaften derartiger Gummibauteile führen. Dadurch wird die Zuverlässigkeit und Dauerhaltbarkeit des Fahrzeugkabinenlagers verringert. Da die zur bedarfsgerechten Auslegung der Gummibauteile entscheidenden Materialeigenschaften, beispielsweise der E-Modul, von der Einsatztemperatur abhängen, kann das Verhalten des Fahrzeugkabinenlagers in dem Einsatztemperaturbereich unerwünschten Veränderungen unterliegen.

Die Aufgabe der vorliegenden Erfindung besteht darin, ein Fahrzeugkabinenlager für eine Kippvorrichtung vorzuschlagen, dessen Lagerverhalten möglichst unabhängig von äußeren Einflüssen, beispielsweise der Einsatztemperatur und dem Einsatzzeitraum, ist. Weiterhin soll das Fahrzeugkabinenlager progressiv elastische Eigenschaften aufweisen und kostengünstig hergestellt werden können. Die Einsatzlebensdauer des Fahrzeugkabinenlagers soll zunehmen.

Wenigstens eine dieser Aufgaben wird durch ein Fahrzeugkabinenlager mit den Merkmalen nach Anspruch 1 gelöst. Dadurch kann das Fahrzeugkabinenlager ein stabiles Lagerverhalten aufweisen, das unabhängiger von äußeren Einflüssen und Alterungsauswirkungen ist. Das Fahrzeugkabinenlager kann länger eingesetzt und betrieben werden.

Das Fahrzeug kann ein Kraftfahrzeug, bevorzugt ein Lastkraftfahrzeug, sein.

Die Kippvorrichtung ist zur Ausübung einer Kippbewegung der Fahrzeugkabine gegenüber dem Fahrzeugrahmen, bevorzugt zur Reparatur und/oder Wartung des Fahrzeugs, vorgesehen.

Das erste Anbindungselement kann mit der Fahrzeugkabine oder dem Fahrzeugrahmen verbunden sein. Die Kolbenvorrichtung kann mit dem jeweils anderen Bauteil aus Fahrzeugkabine oder Fahrzeugrahmen verbunden sein. Das erste Anbindungselement kann über das Fahrzeugkabinenlager gegenüber dem zweiten Anbindungselement begrenzt drehbarsein, bevorzugt zur Ausführung der Kippbewegung.

Das Fahrzeugkabinenlager kann Schwingungen entlang einer Fahrzeughochachse, Fahrzeugquerachse und/oder Fahrzeuglängsachse dämpfen. Die Schwingungen können umso besser gedämpft werden, desto kleiner die Federsteifigkeit des Dämpfungsgewebemittels ist.

Das erste Lagerelement kann eine Hülse sein. Das zweite Lagerelement kann eine, bevorzugt weitere, Hülse sein. Durch die jeweilige Hülse kann die Reibung und damit eine Torsionsbelastung auf das Dämpfungsgewebemittel verringert werden. Das Dämpfungsgewebemittel kann unmittelbar an der Hülse und/oder weiteren Hülse anliegen. Das Dämpfungsgewebemittel kann an der Hülse oder weiteren Hülse vormontiert aufgenommen sein. Dadurch kann der Einbau des Fahrzeugkabinenlagers vereinfacht werden.

Die jeweilige Hülse kann aus Kunststoff und/oder Metall, insbesondere aus Stahl, bevorzugt aus Edelstahl, aufgebaut sein. Die jeweilige Hülse kann über ein Sicherungselement, beispielsweise eine Seitenscheibe, axial, das bedeutet parallel zu der Lagerachse, gesichert sein. Die jeweilige Hülse kann durch eine Presspassung axial befestigt sein. Das erste Anbindungselement kann mit der Hülse vormontiert verbunden sein. Das zweite Anbindungselement kann mit der weiteren Hülse vormontiert verbunden sein.

Eine maximale Verschiebung des ersten Lagerelements gegenüber dem zweiten Lagerelement in eine senkrecht zu der Lagerachse verlaufende Richtung kann durch Anschlagmittel, die bevorzugt wirksam zwischen dem ersten und zweiten Lagerelement angeordnet sind, begrenzbar sein. Dadurch kann das Dämpfungsgewebemittel vor einer Überbelastung, insbesondere bei einer Kippbewegung der Fahrzeugkabine gegenüber dem Fahrzeugrahmen, abgeschirmt werden. Ein weiterer Vorteil ist, dass das Dämpfungsgewebemittel kleiner dimensioniert werden, da es sich nicht im direkten Kraftfluss befindet.

Das Dämpfungsgewebemittel kann elastisch verformbar sein. Bevorzugt wird eine plastische Verformung verhindert. Das Dämpfungsgewebemittel kann für einen Betrieb im Dauerfestigkeitsbereich, bevorzugt für Spannungen unterhalb des horizontalen Verlaufs der Wöhlerkennlinie, ausgelegt sein. Dadurch kann das Fahrzeugkabinenlager ein stabiles Lagerverhalten und eine vergrößerte Einsatzlebensdauer aufweisen.

Das Dämpfungsgewebemittel weist eine parallel zu der Lagerachse verlaufende Breite auf, die bevorzugt derart bemessen ist, dass die Flächenpressung auf das Dämpfungsgewebemittel bei den im Betrieb auftretenden Lasten innerhalb der zulässigen Werte liegt.

Das Dämpfungsgewebemittel kann durch wenigstens ein Sicherungselement, bevorzugt eine Seitenscheibe, in eine parallel zu der Lagerachse verlaufende axiale Richtung gesichert sein. Bevorzugt ist das Dämpfungsgewebemittel in beide axiale Richtungen, insbesondere über zwei derartige Sicherungselemente, gesichert.

Das Dämpfungsgewebemittel kann auf dem ersten Lagerelement oder dem zweiten Lagerelement vormontiert aufgenommen, insbesondere befestigt, sein. Dadurch kann die Montage des Fahrzeugkabinenlagers vereinfacht werden. Das Dämpfungsgewebemittel kann durch ein Sicherungselement gegenüber dem ersten Lagerelement gesichert sein. Das Sicherungselement kann ein Stift sein. Das erste und/oder zweite Lagerelement kann jeweils Aussparungen zur Aufnahme des Sicherungselements aufweisen.

In einer bevorzugten Ausführung der Erfindung weist das Dämpfungsgewebemittel eine progressive Federkennlinie auf. Dadurch kann das Fahrzeugkabinenlager die Schwingungen optimal dämpfen und die bei einer Kippbewegung der Fahrzeugkabine an dem Fahrzeugträger auftretenden Belastungen aufnehmen. Durch Anpassung der Parameter des Dämpfungsgewebemittels wie Drahtstärke, Form und Höhe der Verpressung der Drahtgestricke ist die Feineinstellung einer progressiven Federkonstante möglich.

In einer bevorzugten Ausführung der Erfindung wird das zweite Anbindungselement durch einen Kippzylinder der zwischen der Fahrzeugkabine und dem Fahrzeugrahmen angeordneten Kolbenvorrichtung gebildet. Durch eine progressive Federkennlinie ergibt sich der Vorteil, dass zum einen im unbelasteten Zustand ein großer Hub zugelassen werden kann, der nicht zu einem großen Kraftanstieg führt und zum anderen bei Aktivierung des Kippzylinders (insbesondere beim Lastwechsel am oberen Totpunkt) nicht ein zu großer freier Weg zugelassen werden muss. Ein solcher zu großer freier Weg würde bei einer linearen Kennlinie auftreten.

In einer speziellen Ausführung der Erfindung ist das Dämpfungsgewebemittel ein Metallkissen und die Drähte sind als Metalldrähte ausgeführt. Die Drähte können aus Stahl, bevorzugt aus rostfreiem Stahl, insbesondere Edelstahl, bestehen. Die Drähte können einen mittleren Durchmesser von 0,01 bis 0,5 mm, bevorzugt von 0,1 bis 0,3 mm aufweisen. Die Metallkissen können die auftretenden Kräfte beim Kippvorgang aufnehmen, ohne dass sie plastisch deformiert werden. Aus diesem Grund ist ein metallischer Endanschlag im Lagerauge nicht zwingend notwendig.

Das Dämpfungsgewebemittel kann in einem Temperaturbereich von -40 bis 400°C ein nahezu konstantes Lagerverhalten aufweisen.

Das Dämpfungsgewebemittel kann eine Dämpfung von 15% bis 20% bewirken. Die Dämpfung kann durch eine von der Verformung abhängige Reibung der Drähte entstehen.

Wie bereits oben beschrieben, kann das zweite Anbindungselement durch einen Kippzylinder der zwischen der Fahrzeugkabine und dem Fahrzeugrahmen angeordneten Kolbenvorrichtung gebildet werden.

In einer bevorzugten Ausführung der Erfindung weist der Kippzylinder einen axial verschiebbaren Kolben auf. Der Kolben kann in dem Kippzylinder unter Ausübung einer Hubbewegung axial verschiebbar aufgenommenen sein. Die Kolbenvorrichtung kann hydraulisch wirksam sein. Die Hubbewegung kann abhängig von einer Kippbewegung der Fahrzeugkabine in Bezug auf den Fahrzeugrahmen erfolgen.

In einer speziellen Ausführung der Erfindung ist die Kolbenvorrichtung auslenkbar mit dem Fahrzeugrahmen und/oder der Fahrzeugkabine verbunden.

In einer weiteren speziellen Ausführung der Erfindung wird das zweite Anbindungselement durch den Kolben gebildet.

In einer bevorzugten Ausführung der Erfindung ist das zweite Lagerelement einteilig mit dem Kolben ausgeführt. Auch kann das zweite Lagerelement ein mit dem Kolben verbundenes Bauteil, beispielsweise eine zuvor beschriebene Hülse, sein.

In einer speziellen Ausführung der Erfindung weist der Kolben einen eine Aufnahmeöffnung zumindest abschnittsweise umschließenden Aufnahmebereich auf. Der Aufnahmebereich kann die Aufnahmeöffnung vollständig umgeben. Der Aufnahmebereich kann einteilig aus dem Kolben ausgeführt sein. Hierdurch kann in einfacher Art und Weise direkt als Teil des Kolbens am Kolbenstangenende das Anbindungselement für das zwei Lagerelement ausgebildet sein.

In einer bevorzugten Ausführung der Erfindung ist das Dämpfungsgewebemittel innerhalb einer Aufnahmeöffnung aufgenommen. Das Dämpfungsgewebemittel kann unmittelbar an dem Aufnahmebereich anliegen. Die Aufnahmeöffnung kann als Lagerauge ausgeführt sein. Eine Zentralachse der Aufnahmeöffnung kann senkrecht zu einer sich parallel zu der Hubbewegung erstreckenden Längsachse des Kolbens verlaufen.

In einer bevorzugten Ausführung der Erfindung ist das erste Lagerelement und/oder das erste Anbindungselement ein sich durch die Aufnahmeöffnung erstreckender Bolzen. Der Bolzen kann mit der Fahrzeugkabine oder dem Fahrzeugrahmen fest verbunden sein. Die Aufnahmeöffnung und der Bolzen können konzentrisch ausgerichtet sein.

In einer speziellen Ausführung der Erfindung umschließt das Dämpfungsgewebemittel den Bolzen zumindest abschnittsweise. Das Dämpfungsgewebemittel kann unmittelbar an dem Bolzen anliegen. Der Bolzen kann an einem Boden der Fahrzeugkabine festgelegt sein.

In einer bevorzugten Ausführung der Erfindung ist das Dämpfungsgewebemittel um das erste Lagerelement vollumfänglich geschlossen angeordnet. Das Dämpfungsgewebemittel kann unmittelbar an dem ersten Lagerelement und dem zweiten Lagerelement anliegen.

In einer alternativen Ausführung der Erfindung ist das Dämpfungsgewebemittel um das erste Lagerelement umfangsseitig segmentartig angeordnet. Das Dämpfungsgewebemittel kann aus mehreren umfangsseitig verteilt angeordneten Segmenten bestehen. Die Abmessungen der Segmente können untereinander gleich oder unterschiedlich sein. Die Anzahl und die Anordnung der Segmente kann an die gewünschte Anwendung angepasst werden.

In einer bevorzugten Ausführung der Erfindung ist die Lagerachse senkrecht zu einer entlang der Fahrtrichtung verlaufenden Fahrzeuglängsachse angeordnet.

In einer bevorzugten Ausführungsform der Erfindung ist der Kolben des Kippzylinders über eine erfindungsgemäß ausgeführte Gelenkverbindung mit einem kippbaren Fahrerhaus eines Lastkraftwagens verbunden ist. Ein Kolbenstangenende des Kolbens des Kippzylinders weist als Aufnahmeöffnung ein Lagerauge auf, das als quer zur Längsachse des Kippzylinders verlaufende Bohrung ausgeführt ist. Innerhalb der Bohrung befinden sich ein Bolzen und als Dämpfungsgewebemittel mindestens ein Metallkissen, die den Gelenkzapfen bilden. Die Metallkissen befinden sich zwischen dem Bolzen und der inneren Fläche der Bohrung des Lagerauges.

Weiterhin wird zur Lösung wenigstens einer der zuvor angegebenen Aufgaben eine Kippvorrichtung zur Ermöglichung einer Kippbewegung zwischen einer Fahrzeugkabine und einem Fahrzeugrahmen, aufweisend ein erstes Anbindungselement, ein zweites Anbindungselement und ein Fahrzeugkabinenlager mit wenigstens einem der zuvor angegebenen Merkmale vorgeschlagen. Das erste Lagerelement ist mit dem ersten Anbindungselement und das zweite Lagerelement mit dem zweiten Anbindungselement verbunden und das erste Anbindungselement ist über das Fahrzeugkabinenlager gegenüber dem zweiten Anbindungselement begrenzt drehbar.

Weitere Vorteile und vorteilhafte Ausgestaltungen der Erfindung ergeben sich aus der Figurenbeschreibung und den Abbildungen.

Die Erfindung wird im Folgenden unter Bezugnahme auf die Abbildungen ausführlich beschrieben. Es zeigen im Einzelnen:
- Figur 1:: Einen Ausschnitt eines Lastkraftfahrzeugs mit einer Kippvorrichtung in einer speziellen Ausführungsform der Erfindung.
- Figuren 2 bis 6:: Jeweils ein Fahrzeugkabinenlager in einer speziellen Ausführungsform der Erfindung.

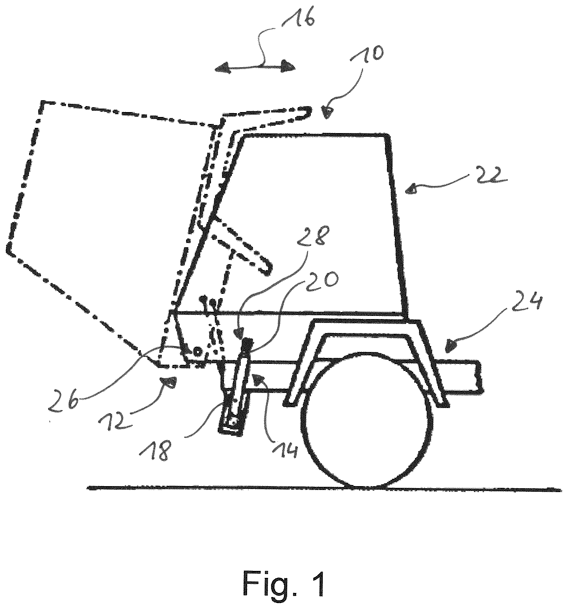

Figur 1 zeigt einen Ausschnitt eines Lastkraftfahrzeugs 10 mit einer Kippvorrichtung 12 in einer speziellen Ausführungsform der Erfindung. Die Kippvorrichtung 12 umfasst eine Kolbenvorrichtung 14, die einen in einem Kippzylinder 18 bewegbaren Kolben 20 aufweist. Die Kolbenvorrichtung 14 ist zwischen einer Fahrzeugkabine 22 und einem Fahrzeugrahmen 24 zur Ermöglichung einer Kippbewegung der Fahrzeugkabine 22 gegenüber dem Fahrzeugrahmen 24 auslenkbar aufgenommen. Bei einer Kippbewegung der Fahrzeugkabine 22 gegenüber dem Fahrzeugrahmen 24, beispielsweise zur Reparatur und/oder Wartung des Fahrzeugs, wird die Fahrzeugkabine 22 um eine senkrecht zu einer Fahrzeuglängsrichtung 16 liegenden Drehachse 26 gegenüber dem Fahrzeugrahmen 24 verdreht.

Die Kolbenvorrichtung 14 wird dabei gegenüber dem Fahrzeugrahmen 24 und der Fahrzeugkabine 22 ausgelenkt und der Kolben 20 entlang einer Längsachse unter Ausübung einer Hubbewegung axial gegenüber dem Kippzylinder 18 ausgefahren. Die Kolbenvorrichtung 14 ist über ein Fahrzeugkabinenlager 28 mit der Fahrzeugkabine 22 verbunden. Das Fahrzeugkabinenlager 28 bewirkt eine Dämpfung von Schwingungen zwischen dem Fahrzeugrahmen 24 und der Fahrzeugkabine 22 und ermöglicht eine Lagerung der Fahrzeugkabine 22 an dem Fahrzeugrahmen 24.

Bei einer Kippbewegung der Fahrzeugkabine 22 gegenüber dem Fahrzeugrahmen 24 erfährt das Fahrzeugkabinenlager 28 eine Torsion, die zu einer hohen Belastung des Fahrzeugkabinenlagers 28 führt. Einerseits soll das Fahrzeugkabinenlager 28 eine wirksame Dämpfung der Schwingungen zwischen dem Fahrzeugrahmen 24 und der Fahrzeugkabine 22 bewirken und andererseits die Belastungen bei der Kippbewegung aufnehmen können.

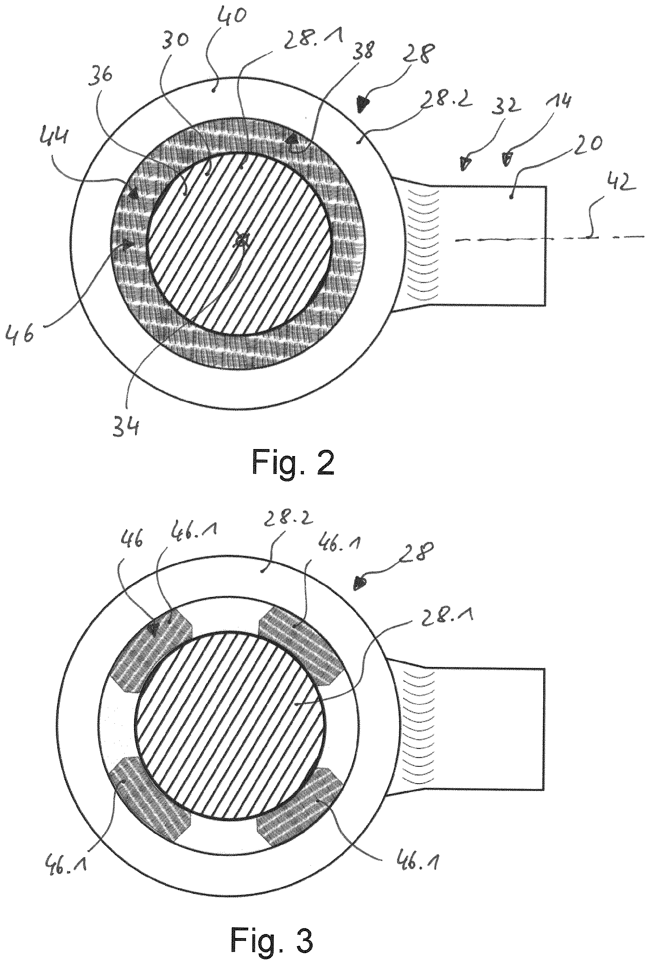

In Figur 2 ist ein Fahrzeugkabinenlager 28 in einer speziellen Ausführungsform der Erfindung dargestellt. Das Fahrzeugkabinenlager 28 weist ein erstes Lagerelement 28.1 zur Verbindung mit einem der Fahrzeugkabine zugeordneten ersten Anbindungselement 30 und ein gegenüber dem ersten Lagerelement 28.1 begrenzt bewegbares zweites Lagerelement 28.2 zur Verbindung mit einem dem Fahrzeugrahmen zugeordneten zweiten Anbindungselement 32 auf. Das erste und zweite Lagerelement 28.1, 28.2 sind konzentrisch zueinander um eine gemeinsame Lagerachse 34 drehbar angeordnet.

Das erste Lagerelement 28.1 ist dabei als Bolzen 36 ausgeführt, der zugleich das erste Anbindungselement 30 bildet und mit einem Boden der Fahrzeugkabine verbindbar ist. Das zweite Anbindungselement 32 ist als zwischen der Fahrzeugkabine und dem Fahrzeugrahmen angeordnete Kolbenvorrichtung 14, hier insbesondere als Kolben 20, ausgeführt. Bevorzugt wird das zweite Lagerelement 28.2 durch einen eine Aufnahmeöffnung 38 zumindest abschnittsweise, hier vollumfänglich, umschließenden Aufnahmebereich 40 des Kolbens 20 gebildet. Die Aufnahmeöffnung 38 ist dabei als Lagerauge der Kolbenvorrichtung 14 ausgeführt. Eine Zentralachse der Aufnahmeöffnung 38 ist gleich der Lagerachse 34 und liegt senkrecht zu einer Längsachse 42 des Kolbens 14.

Das erste Lagerelement 28.1 ist entgegen der Federkraft eines zwischen dem ersten und Lagerelement 28.1, 28.2 angeordneten Verbindungselements 44 gegenüber dem zweiten Lagerelement 28.2 begrenzt bewegbar. Das Verbindungselement 44 weist ein aus in alle drei zueinander senkrechten Raumrichtungen ineinander verflochtenen Drähten aufgebautes Dämpfungsgewebemittel 46 auf. Dadurch kann das Fahrzeugkabinenlager 28 ein stabiles und konstantes Lagerverhalten und eine vergrößerte Einsatzlebensdauer aufweisen. Das Lagerverhalten ist unabhängiger von äußeren Einflüssen und Alterungsauswirkungen.

Das Dämpfungsgewebemittel 46 ist, bevorzugt unter Vermeidung einer plastischen Verformung, elastisch verformbar. Das Dämpfungsgewebemittel 46 weist eine vorzugsweise progressive Federkennlinie auf, durch die das Dämpfungsgewebemittel 46 sowohl die Verringerung der Schwingungen zwischen der Fahrzeugkabine und dem Fahrzeugrahmen, als auch eine Kippbewegung der Fahrzeugkabine gegenüber dem Fahrzeugrahmen mit dabei auftretender Torsionsbelastung ermöglicht.

Das Dämpfungsgewebemittel 46 ist bevorzugt ein Metallkissen und die Drähte sind als Metalldrähte, bevorzugt aus rostfreiem Stahl, ausgeführt. Dadurch kann das Fahrzeugkabinenlager 28 eine Dämpfung von 15% bis 20% durch Reibung der Drähte bewirken. Das Dämpfungsgewebemittel 46 ist unmittelbar zwischen dem Bolzen 36 und dem Aufnahmebereich 40 des Kolbens 20 angeordnet. Dabei umschließt das Dämpfungsgewebemittel 46 das erste Lagerelement 28.1, hier den Bolzen 36, und liegt unmittelbar an dem Bolzen 36 an. Das Dämpfungsgewebemittel 46 ist um das erste Lagerelement 28.1 vollumfänglich geschlossen angeordnet. Eine Breite des Dämpfungsgewebemittels 46 kann abhängig von einer durch die Belastungen im Betrieb auftretenden maximal zu erwartenden Flächenpressung gewählt werden.

Figur 3 zeigt ein Fahrzeugkabinenlager 28 in einer weiteren speziellen Ausführungsform der Erfindung. Der Aufbau gleicht dem aus Figur 2 bis auf nachfolgend genannte Unterschiede. Das Dämpfungsgewebemittel 46 ist um das erste Lagerelement 28.1 umfangseitig segmentartig angeordnet und besteht aus vier umfangseitig verteilt angeordneten Segmenten 46.1. Die Abmessungen der Segmente 46.1 sind dabei untereinander gleich. Die Anzahl und die Anordnung der Segmente 46.1 kann an die gewünschte Anwendung angepasst werden. Die Segmente 46.1 sind unmittelbar zwischen dem ersten Lagerelement 28.1 und dem zweiten Lagerelement 28.2 jeweils an diesen anliegend angeordnet.

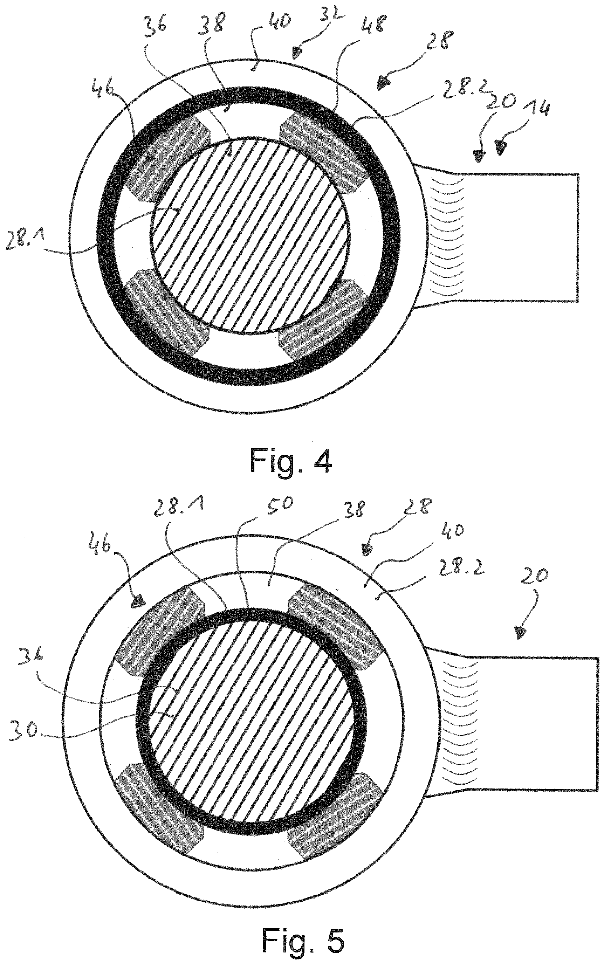

In Figur 4 ist ein Fahrzeugkabinenlager 28 in einer weiteren speziellen Ausführungsform der Erfindung dargestellt. Der Aufbau gleicht dem aus Figur 3 bis auf nachfolgend genannte Unterschiede. Das zweite Lagerelement 28.2 ist dabei als Hülse 48 ausgeführt, die in der Aufnahmeöffnung 38 des als Aufnahmebereich 40 des Kolbens 20 der Kolbenvorrichtung 14 ausgeführtes zweites Anbindungselement 32 angeordnet ist. Das Dämpfungsgewebemittel 46 kann an der Hülse 48 vormontiert aufgenommen sein und beim Einbau auf den als erstes Lagerelement 28.1 ausgeführten Bolzen 36, der mit der Fahrzeugkabine verbunden ist, aufgeschoben werden. Dadurch kann der Zusammenbau des Fahrzeugkabinenlagers 28 in dem Lastkraftfahrzeug vereinfacht werden.

Figur 5 zeigt ein Fahrzeugkabinenlager 28 in einer weiteren speziellen Ausführungsform der Erfindung. Der Aufbau gleicht dem aus Figur 4 bis auf nachfolgend genannte Unterschiede. Das zweite Lagerelement 28.2 ist ein einteilig mit dem Kolben 20 ausgeführter und die Aufnahmeöffnung 38 ausbildender Aufnahmebereich 40, entsprechend den Ausführungen in Figur 2 und 3. Das Dämpfungsgewebemittel 46 ist über eine als erstes Lagerelement 28.1 ausgeführte Hülse 50 an dem Bolzen 36, der das erste Anbindungselement 30 bildet, aufgenommen. Dabei kann das Dämpfungsgewebemittel 46 an der Hülse 50 vormontiert sein und beim Zusammenbau des Fahrzeugkabinenlagers 28 in die Aufnahmeöffnung 38 des zweiten Lagerelements 28.2 eingeschoben werden.

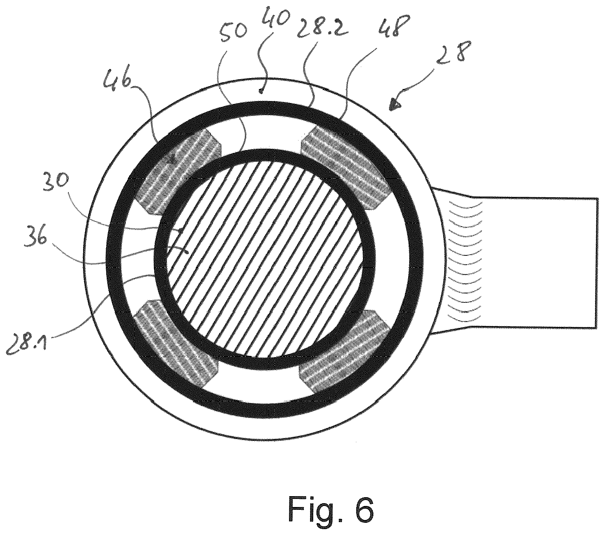

In Figur 6 ist ein Fahrzeugkabinenlager 28 in einer weiteren speziellen Ausführungsform der Erfindung dargestellt. Dabei gleicht der Aufbau dem aus Figur 5, bis auf nachfolgend genannte Unterschiede. Eine weitere Hülse 48, entsprechend der Ausführung in Figur 4, ist zwischen dem Dämpfungsgewebemittel 46 und dem zweiten Lagerelement 28.2 angeordnet. Das Dämpfungsgewebemittel 46 kann entweder an der inneren Hülse 50, die den Bolzen 36, der wiederum das erste Anbindungselement 30 bildet, umschließt oder an der mit dem Aufnahmebereich 40 unmittelbar verbundenen äußeren Hülse 48 vormontiert aufgenommen sein. Die innere Hülse 50 bildet das erste Lagerelement 28.1 und die äußere Hülse 48 das zweite Lagerelement 28.2, zwischen denen das Dämpfungsgewebemittel 46 angeordnet ist.

### Bezugszeichenliste

- 10: Lastkraftfahrzeug
- 12: Kippvorrichtung
- 14: Kolbenvorrichtung
- 16: Fahrzeuglängsachse
- 18: Kippzylinder
- 20: Kolben
- 22: Fahrzeugkabine
- 24: Fahrzeugrahmen
- 26: Drehachse
- 28: Fahrzeugkabinenlager
- 28.1: erstes Lagerelement
- 28.2: zweites Lagerelement
- 30: erstes Anbindungselement
- 32: zweites Anbindungselement
- 34: Lagerachse
- 36: Bolzen
- 38: Aufnahmeöffnung
- 40: Aufnahmebereich
- 42: Längsachse
- 44: Verbindungselement
- 46: Dämpfungsgewebemittel
- 46.1: Segment
- 48: Hülse
- 50: Hülse

## Patentansprüche

1. Fahrzeugkabinenlager (28) zur Anordnung in einer Kolbenvorrichtung (14) einer Kippvorrichtung (12) zwischen einer Fahrzeugkabine (22) und einem Fahrzeugrahmen (24) und zur Dämpfung von zwischen dem Fahrzeugrahmen (24) und der Fahrzeugkabine (22) übertragenen Schwingungen, aufweisend
ein um eine Lagerachse (34) drehbares erstes Lagerelement (28.1) zur Verbindung mit einem ersten Anbindungselement 30, das der Fahrzeugkabine (22) oder dem Fahrzeugrahmen (24) zugeordnet ist,
ein gegenüber dem ersten Lagerelement (28.1) entgegen der Federkraft eines Verbindungselements (44) begrenzt bewegbares und konzentrisch zu dem ersten Lagerelement (28.1) angeordnetes zweites Lagerelement (28.2) zur Verbindung mit einem zweiten Anbindungselement 32, das durch die Kolbenvorrichtung (14) der Kippvorrichtung (12) gebildet wird,
**dadurch gekennzeichnet, dass**
das Verbindungselement (44) wenigstens ein aus in alle drei zueinander senkrechten Raumrichtungen verflochtenen Drähten aufgebautes Dämpfungsgewebemittel (46) aufweist.

2. Fahrzeugkabinenlager (28) nach Anspruch 1, **dadurch gekennzeichnet, dass** das Dämpfungsgewebemittel (46) eine progressive Federkennlinie aufweist.

3. Fahrzeugkabinenlager (28) nach Anspruch 1 oder 2, **dadurch gekennzeichnet, dass** das Dämpfungsgewebemittel (46) ein Metallkissen ist und die Drähte als Metalldrähte ausgeführt sind.

4. Fahrzeugkabinenlager (28) nach einem der vorangehenden Ansprüche, **dadurch gekennzeichnet, dass** Anschlagmittel zur Begrenzung einer maximalen Verschiebung des ersten Lagerelements gegenüber dem zweiten Lagerelement in eine senkrecht zu der Lagerachse verlaufende Richtung wirksam zwischen dem ersten und zweiten Lagerelement angeordnet sind.

5. Fahrzeugkabinenlager (28) nach einem der vorangehenden Ansprüche, **dadurch gekennzeichnet, dass** das zweite Anbindungselement (32) durch einen Kippzylinder (18) der zwischen der Fahrzeugkabine (22) und dem Fahrzeugrahmen (24) angeordneten Kolbenvorrichtung (14) gebildet wird.

6. Fahrzeugkabinenlager (28) nach Anspruch 4, **dadurch gekennzeichnet, dass** der Kippzylinder (18) einen axial verschiebbaren Kolben (20) aufweist.

7. Fahrzeugkabinenlager (28) nach Anspruch 5, **dadurch gekennzeichnet, dass** das zweite Anbindungselement (32) durch den Kolben (20) gebildet wird.

8. Fahrzeugkabinenlager (28) nach Anspruch 5 oder 6, **dadurch gekennzeichnet, dass** das zweite Lagerelement (28.2) einteilig mit dem Kolben (20) ausgeführt ist.

9. Fahrzeugkabinenlager (28) nach einem der Ansprüche 5 bis 7, **dadurch gekennzeichnet, dass** der Kolben (20) einen eine Aufnahmeöffnung (38) zumindest abschnittsweise umschließenden Aufnahmebereich (40) aufweist.

10. Fahrzeugkabinenlager (28) nach Anspruch 8, **dadurch gekennzeichnet, dass** das Dämpfungsgewebemittel (46) innerhalb der Aufnahmeöffnung (38) aufgenommen ist.

11. Fahrzeugkabinenlager (28) nach einem Ansprüche 8 oder 9, **dadurch gekennzeichnet, dass** das erste Lagerelement (28.1) und/oder das erste Anbindungselement (30) ein sich durch die Aufnahmeöffnung (38) erstreckender Bolzen (36) ist.

12. Fahrzeugkabinenlager (28) nach Anspruch 10, **dadurch gekennzeichnet, dass** das Dämpfungsgewebemittel (46) den Bolzen (36) zumindest abschnittsweise umschließt.

13. Fahrzeugkabinenlager (28) nach einem der vorangehenden Ansprüche, **dadurch gekennzeichnet, dass** das Dämpfungsgewebemittel (46) um das erste Lagerelement (28.1) vollumfänglich geschlossen angeordnet ist.

14. Fahrzeugkabinenlager (28) nach einem der Ansprüche 1 bis 11, **dadurch gekennzeichnet, dass** das Dämpfungsgewebemittel (46) um das erste Lagerelement (28.1) umfangsseitig segmentartig angeordnet ist.

15. Fahrzeugkabinenlager (28) nach einem der vorangehenden Ansprüche, **dadurch gekennzeichnet, dass** die Lagerachse (34) senkrecht zu einer entlang der Fahrtrichtung verlaufenden Fahrzeuglängsachse (16) angeordnet ist.

16. Kippvorrichtung (12) zur Ermöglichung einer Kippbewegung zwischen einer Fahrzeugkabine (22) und einem Fahrzeugrahmen 24, aufweisend ein erstes Anbindungselement 30, ein zweites Anbindungselement (32) und ein Fahrzeugkabinenlager (28) nach einem der vorangehenden Ansprüche, wobei das erste Lagerelement (28.1) mit dem ersten Anbindungselement (30) und das zweite Lagerelement (28.2) mit dem zweiten Anbindungselement (32) verbunden ist und das erste Anbindungselement (30) über das Fahrzeugkabinenlager (28) gegenüber dem zweiten Anbindungselement (32) begrenzt drehbar ist.
